# FASCICULE DE BREVET EUROPEEN

(11) **EP 0 348 265 B1**
(45) Date de publication et mention de la délivrance du brevet: **20.07.1994**
(21) Numéro de dépôt: 89401612.0
(22) Date de dépôt: 09.06.1989
(51) Int. Cl.: G11B 5/187, G11B 5/23

(54) **Procédé de réalisation d'une tête magnétique d'enregistrement/lecture à partir d'un substrat magnétique**
Herstellungsverfahren eines Aufzeichnungs-Wiedergabemagnetkopfes aus einem magnetischen Substrat
Process for producing a magnetic recording/reading head from a magnetic substrate

(30) Priorité: 24.06.1988 FR 8808526
(43) Date de publication de la demande: 27.12.1989
(73) Titulaire: COMPAGNIE EUROPEENNE DE COMPOSANTS ELECTRONIQUES LCC, F-92400 Courbevoie (FR)
(72) Inventeur: Coutellier, Jean-Marc, F-92045 Paris La Defense (FR); Bussac, Claude, F-92045 Paris La Defense (FR); Meunier, Paul-Louis, F-92045 Paris La Defense (FR); Penot, Alain, F-92045 Paris La Defense (FR)
(74) Mandataire: Guérin, Michel

(56) Documents cités:
- EP-A- 0 148 628
- DE-A- 2 041 015
- PATENT ABSTRACTS OF JAPAN, vol. 10, no. 195 (P-475)[2251], 9 juillet 1986, page121 P 475;& JP-A-61 39 207
- PATENT ABSTRACTS OF JAPAN, vol. 6, no. 2 (P-96)[880], 8 janvier 1982, page 72 P 96;& JP-A-56127916
- PATENT ABSTRACTS OF JAPAN, vol. 11, no. 375 (P-644)[2822], 8 décembre 1987,page 138 P 644;& JP-A-62 145 515
- PATENT ABSTRACTS OF JAPAN, vol. 11, no. 253 (P-606)[2700], 18 août 1987, page151 P 606;& JP-A-62 60 107

## Description

L'invention concerne un procédé de réalisation d'au moins une tête magnétique d'enregistrement/lecture à partir d'un substrat en matériau magnétique

Les têtes magnétiques de lecture et/ou d'enregistrement sont constituées d'un circuit magnétique en forme d'anneau coupé par un entrefer étroit constitué d'un matériau non magnétique.

On peut classer les têtes magnétiques en trois grandes familles :
- les têtes massives sont réalisées par usinage et assemblage de deux demi-têtes en matériau magnétique telles que les têtes vidéo (têtes VHS) ou les têtes audio analogiques. Le bobinage de ces têtes est réalisé en fin de procédé de réalisation.
- Les têtes couches minces sont réalisées par dépôts successifs de matériaux magnétiques, diélectriques et conducteurs. Ces couches subissent des opérations de masquage et de gravure qui permettent d'obtenir le circuit magnétique, l'entrefer et les spires conductrices.
- Les têtes comportant de chaque côté de l'entrefer un alliage métallique magnétique d'épaisseur variant entre 0,1 et 40 micromètres, le reste du circuit magnétique et les spires conductrices étant réalisés de la même façon que pour les têtes massives. Il s'agit des têtes dites MIG (Metal In Gap) qui sont utilisées aujourd'hui dans les systèmes vidéo 8 mm ou audio numérique RDAT (Rotary Digital Audio Tape).

Dans le procédé de réalisation d'une tête magnétique d'enregistrement/lecture, il est souvent nécessaire d'usiner une partie hétérogène constituée par l'association d'un matériau magnétique (de la ferrite par exemple) et d'un matériau non magnétique (du verre par exemple). C'est le cas notamment pour la réalisation de la tête magnétique décrite dans la demande de brevet français de la demanderesse enregistrée sous le n° 87 14824. Si une couche mince magnétique doit être déposée sur cette face usinée, comme pour la tête magnétique décrite dans la demande de brevet français de la demanderesse enregistrée sous le n° 87 14820, il est nécessaire de disposer d'une excellente qualité de surface.

Cependant, l'opération de polissage d'une partie hétérogène conduit toujours à une usure différentielle des deux matériaux constituant cette partie hétérogène. Cette usure différentielle est d'autant plus importante que les matériaux présentent des duretés différentes. C'est le cas en particulier de la ferrite qui se polit habituellement avec un mélange de poudre de diamant, et du verre qui se polit habituellement avec de l'oxyde de cérium. Le plan ainsi usiné présente donc un défaut de planéité qui peut être incompatible avec les exigences des étapes suivantes de la réalisation de la tête magnétique.

Pour remédier à ce problème, l'invention propose un nouveau procédé de réalisation d'au moins une tête magnétique qui permet le polissage différé des matériaux magnétique et non magnétique constituant la face active de la tête.

Le Brevet JP-A-61-39207 décrit un procédé de réalisation d'une tête magnétique d'enregistrement/lecture, dans laquelle une rainure est usinée sur une face du substrat destinée à devenir la face interne du circuit magnétique. Ladite rainure est remplie à l'aide d'une baguette du verre fondue et l'entrefer est établi par polissage de la face active. Ladite face interne n'est ensuite plus usinée.

L'invention a donc pour objet un procédé de réalisation d'au moins une tête magnétique d'enregistrement/lecture à partir d'un substrat en matériau magnétique, la tête magnétique possédant une face active définie par les pôles magnétiques de la tête séparés par un entrefer, caractérisé en ce qu'il comporte les étapes suivantes :
- 1ère étape : réalisation d'une rainure de largeur déterminée sur une face du substrat destinée à devenir la face active de la tête,
- 2ème étape : polissage de la face du substrat comportant la rainure,
- 3ème étape : remplissage de la rainure par un matériau non magnétique destiné à constituer l'entrefer, le remplissage faisant déborder ce matériau non magnétique de la rainure,
- 4ème étape : polissage du matériau débordant jusqu'à atteindre le niveau du substrat,
- 5ème étape : usinage du substrat à partir d'une autre face que la face active pour obtenir un entrefer de profondeur déterminée,
- 6ème étape : fixation sur les pôles magnétiques d'une pièce de fermeture du champ magnétique,
- 7ème étape : mise en place d'un bobinage dans le circuit magnétique constitué par les pôles et ladite pièce de fermeture.

L'invention sera mieux comprise, et d'autres avantages apparaîtront, à la lecture de la description qui va suivre, donnée à titre non limitatif, et grâce aux dessins annexés parmi lesquels :
- les figures 1 à 4 illustrent les 4 premières étapes du procédé selon l'invention,
- les figures 5 à 7 illustrent une première variante de la suite du procédé selon l'invention,
- les figures 8 à 10 illustrent une seconde variante de la suite du procédé selon l'invention.

A titre d'exemple de réalisation, la description va porter sur la réalisation d'une seule tête magnétique, mais l'invention peut être avantageusement utilisée pour réaliser simultanément un grand nombre de têtes magnétiques à partir d'un même substrat.

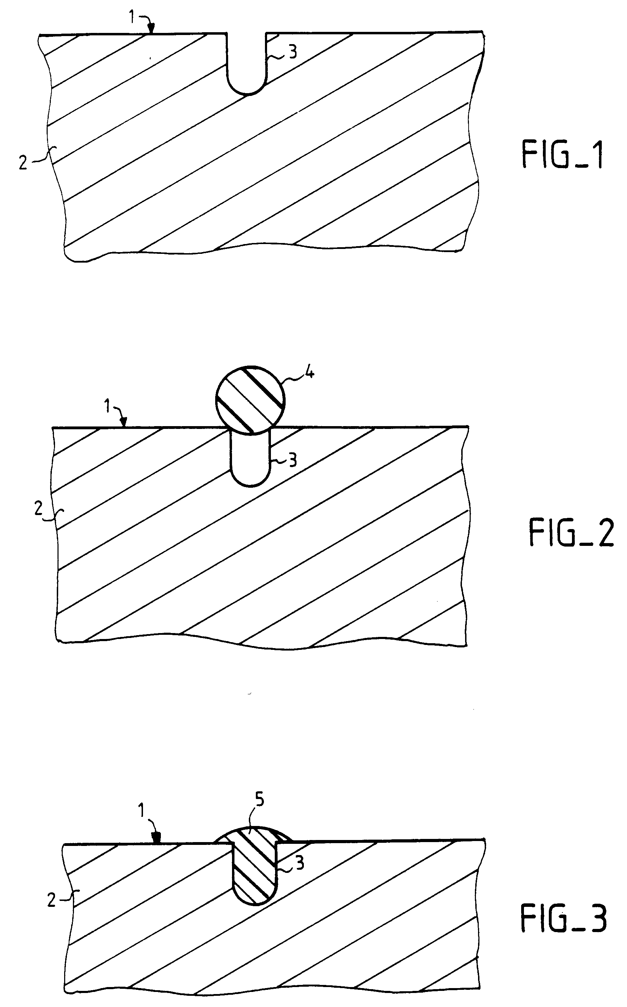

Selon la première étape du procédé selon l'invention, on réalise, par tout moyen connu de l'homme de l'art, une rainure sur l'une des faces d'un susbstrat en matériau magnétique, par exemple en ferrite. C'est ce que montre la figure 1 où la face 1 du substrat 2 est creusée par la rainure 3. A titre d'exemple, la rainure 3 peut avoir une largeur de 200 »m pour une profondeur de 300 »m.

La seconde étape du procédé consiste à polir la face 1 du susbstrat 2. L'opération de polissage peut être menée selon des techniques bien connues de l'homme de l'art. Par exemple, si le substrat 2 est en ferrite, le polissage peut être effectué avec une poudre de diamant.

Il est préférable de mener l'opération de polissage après l'opération de rainurage car celle-ci peut laisser subsister des bavures.

La troisième étape du procédé consiste à remplir les rainures par un matériau non magnétique, par exemple du verre, ce matériau non magnétique étant destiné à constituer l'entrefer. Une façon particulièrement avantageuse de remplir une rainure de dimensions aussi petites que celles indiquées plus haut consiste à utiliser une baguette de verre. Une même baguette permet alors de réaliser les entrefers de toute une rangée de têtes magnétiques. La figure 2 représente, vue axialement, une baguette de verre 4 déposée sur la rainure 3. Le diamètre de la baguette 4 a été prévu pour que le verre, une fois mis en place dans la rainure, déborde de cette rainure. C'est ce que montre la figure 3 ou l'on voit le matériau diélectrique 5 déborder de la rainure 3. Le remplissage de la rainure peut être effectué en portant la baguette de verre à une température supérieure à son point de fusion. Cette opération peut être réalisée par chauffage de l'ensemble substrat + baguette de verre, le point de fusion du verre étant nettement inférieur à celui du substrat. La baguette peut aussi être fondue par chauffage localisé.

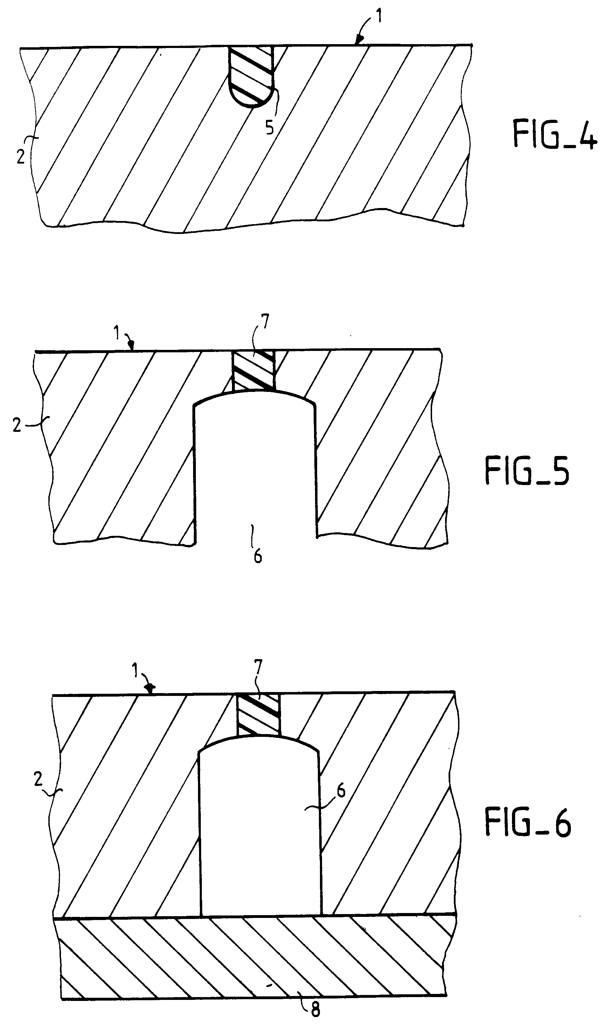

La quatrième étape du procédé consiste à polir le verre débordant de la rainure. Par des techniques de polissage bien connues de l'homme de l'art, par exemple à l'aide de poudre d'oxyde de cérium, le verre peut être poli jusqu'à ce qu'il affleure la surface déjà polie du substrat. C'est ce que montre la figure 4. Ainsi, le retrait du verre par rapport à la face polie 1 sera au maximum de 500 angströms pour une rainure dont les dimensions ont été citées plus haut.

Les deux matériaux de la face active peuvent être considérés comme étant dans le même plan.

A partir de ce substrat hétérogène poli, on peut continuer l'élaboration de la tête de différentes façons.

Une première solution consiste à usiner, à partir de la face du substrat opposée à la face active, des gorges jusqu'à atteindre le matériau non magnétique d'entrefer. C'est ce que montre la figure 5 où l'on voit que la gorge 6 est plus large que l'entrefer 7 résultant du matériau diélectrique 5. La profondeur de l'entrefer peut être inférieure à 200 »m.

Ensuite, comme le montre la figure 6, une contre-pièce 8 de fermeture du champ magnétique peut être fixée à la face du substrat opposée à la face active. La contre-pièce peut être de même nature que le substrat 2. Sa fixation sur le substrat peut être obtenue par collage. Le matériau assurant le collage peut être un verre à température de fusion inférieure à celle du verre utilisé pour réaliser l'entrefer, le collage se faisant alors par élévation de température. Le matériau assurant le collage peut également être en polymère contenant une poudre de céramique.

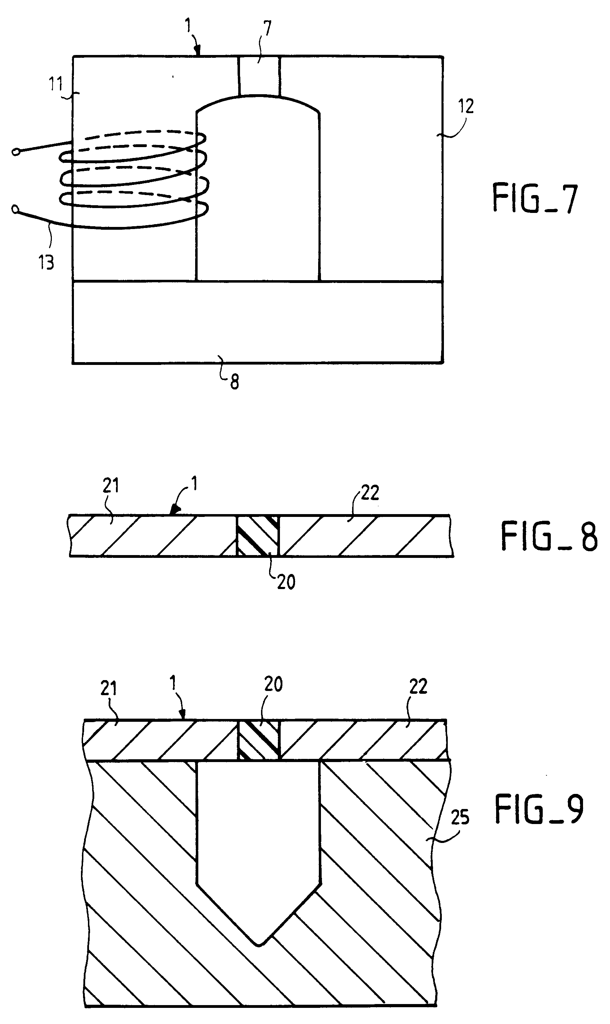

La tête magnétique peut alors être terminée suivant l'enseignement des demandes de brevet déjà citées. La figure 7 représente une tête magnétique d'enregistrement/lecture équipée de son bobinage 13 et dont les deux pôles magnétiques, formés à partir du substrat 2, portent les références 11 et 12. Une variante de réalisation consisterait à disposer le bobinage avant de coller la contre-pièce 8.

Une seconde solution pour terminer l'élaboration de la tête magnétique consiste à amincir le substrat 2 jusqu'à supprimer la continuité de la partie ferrite. C'est ce que montre la figure 8 où les deux pôles magnétiques 21 et 22 sont séparés par l'entrefer 20. La qualité de surface de la face opposée à la face active 1 n'a pas besoin d'être très bonne. La profondeur de l'entrefer peut être de l'ordre de 200 »m. L'amincissement du substrat peut être obtenu par polissage diamant.

Comme pour la première solution, une contre-pièce 25 (en forme de U) de fermeture du champ magnétique est fixée sur les pôles magnétiques 21 et 22, comme le montre la figure 9.

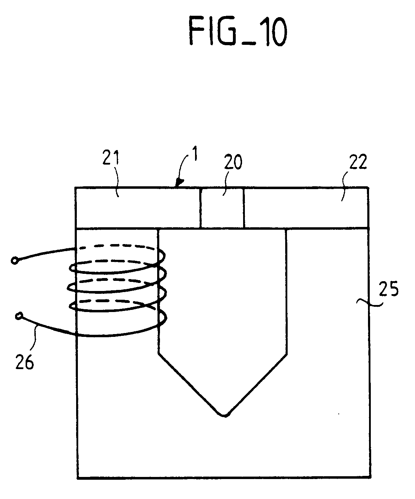

La tête magnétique peut alors être terminée suivant l'enseignement des demandes de brevet déjà citées. La figure 10 représente une tête magnétique d'enregistrement/lecture équipée de son bobinage 26. Une variante de réalisation consisterait à disposer le bobinage dans une branche de la contre-pièce avant de la fixer sur les pôles magnétiques.

## Revendications

1. Procédé de réalisation d'au moins une tête magnétique d'enregistrement/lecture à partir d'un substrat (2) en matériau magnétique, la tête magnétique possédant une face active (1) définie par les pôles magnétiques de la tête séparés par un entrefer, caractérisé en ce qu'il comporte les étapes suivantes :
- 1ère étape : réalisation d'une rainure (3) de largeur déterminée sur une face du substrat destinée à devenir la face active de la tête,
- 2ème étape : polissage de la face du substrat la comportant la rainure,
- 3ème étape : remplissage de la rainure par un matériau non magnétique (5) destiné à constituer entrefer, le remplissage faisant déborder ce matériau non magnétique de la rainure (3),
- 4ème étape : polissage du matériau débordant jusqu'à atteindre le niveau du substrat,
- 5ème étape : usinage du substrat à partir d'une autre face que la face active pour obtenir un entrefer de profondeur déterminée,
- 6ème étape : fixation sur les pôles magnétiques d'une pièce de fermeture du champ magnétique,
- 7ème étape : mise en place d'un bobinage dans le circuit magnétique constitué par les pôles et ladite pièce de fermeture.

2. Procédé selon la revendication 1, caractérisé en ce que la 7ème étape est réalisée avant la 6ème étape.

3. Procédé selon l'une des revendications 1 ou 2, caractérisé en ce que, pour la mise en oeuvre de la 3ème étape, ledit matériau non magnétique se présente sous la forme d'une baguette (4) qui est d'abord disposée sur la rainure (3) le matériau non magnétique étant ensuite introduit dans la rainure.

4. Procédé selon la revendication 3, caractérisé en ce que l'introduction dudit matériau non magnétique dans la rainure est obtenue en chauffant la baguette (4) à une température provoquant sa fusion.

5. Procédé selon l'une quelconque des revendications 1 à 4, caractérisé en ce que les 5ème et 6ème étapes sont menées de la manière suivante :
- 5ème étape : usinage d'une gorge (6) à partir de la face du substrat opposée à la face active (1) jusqu'à atteindre ledit matériau non magnétique et obtenir un entrefer (7) de profondeur déterminée,
- 6ème étape : fixation sur les pôles magnétiques (11, 12) délimités par ladite gorge (6) de la pièce (8) de fermeture du champ magnétique.

6. Procédé selon l'une quelconque des revendications 1 à 4, caractérisé en ce que les 5è et 6ème étapes sont menées de la manière suivante :
- 5ème étape : amincissement du substrat (2) à partir de la face du substrat opposée à la face active (1) jusqu'à obtenir deux pôles magnétiques (21, 22) séparés par un entrefer (20) de profondeur déterminée,
6ème étape : fixation sur les pôles magnétiques (21, 22) d'une pièce (25) en forme de U permettant la fermeture du champ magnétique.

7. Procédé selon l'une quelconque des revendications précédentes, caractérisé en ce que la fixation de la pièce de fermeture du champ magnétique sur les pôles magnétiques se fait par collage.

## Claims

1. Method of producting at least one magnetic recording/playback head from a substrate (2) made of a magnetic material, the magnetic head having an active face (1) defined by the magnetic poles of the head separated by a head gap, characterized in that it comprises the following steps:
- 1st step: production of a groove (3) of predetermined width on a face of the substrate destined to become the active face of the head,
- 2nd step: polishing of the face of the substrate containing the groove,
- 3rd step: filling of the groove by a non-magnetic material (5) destined to form the head gap, the filling causing this non-magnetic material to protrude from the groove (3),
- 4th step: polishing of the protruding material until it reaches the level of the substrate,
- 5th step: machining of the substrate from a face other than the active face in order to obtain a head gap of predetermined depth,
- 6th step: attachment to the magnetic poles of a component for closing the magnetic field,
- 7th step: introduction of a coil into the magnetic circuit formed by the poles and the said closing component.

2. Method according to Claim 1, characterized in that the 7th step is carried out before the 6th step.

3. Method according to one of Claims 1 or 2, characterized in that, for the implementation of the 3rd step, the said non-magnetic material comes in the form of a rod (4) which is first placed on the groove (3), the non-magnetic material then being introduced into the groove.

4. Method according to Claim 3, characterized in that the introduction of the said non-magnetic material into the groove is obtained by heating the rod (4) to a temperature causing it to melt.

5. Method according to any one of Claims 1 to 4, characterized in that the 5th and 6th steps are carried out in the following manner:
- 5th step: machining of a furrow (6) from the face of the substrate opposite the active face (1) until it reaches the said non-magnetic material and a head gap (7) of predetermined depth is obtained,
- 6th step: attachment to the magnetic poles (11, 12) bounded by the said furrow (6) of the component (8) for closing the magnetic field.

6. Method according to any one of Claims 1 to 4, characterized in that the 5th and 6th steps are carried out in the following manner:
- 5th step: thinning of the substrate (2) from the face of the substrate opposite the active face (1) until two magnetic poles (21, 22) are obtained separated by a head gap (20) of predetermined depth,
6th step: attachment to the magnetic poles (21, 22) of a U-shaped component (25) enabling the magnetic field to be closed.

7. Method according to any one of the preceding claims, characterized in that the attachment of the component for closing the magnetic field to the magnetic poles is achieved by adhesive bonding.

## Patentansprüche

1. Verfahren zur Herstellung mindestens eines magnetischen Schreib-/Lesekopfs ausgehend von einem Substrat (2) aus einem Magnetmaterial, wobei der Magnetkopf eine aktive Fläche (1) besitzt, die durch die von einem Magnetspalt getrennten Magnetpole des Kopfes definiert ist, dadurch gekennzeichnet, daß es folgende Verfahrensschritte aufweist:
- erster Schritt: Herstellung einer Rinne (3) einer bestimmten Breite auf einer Substratfläche, die später die aktive Fläche des Kopfes werden soll,
- zweiter Schritt: Polieren der die Rinne aufweisenden Substratfläche,
- dritter Schritt: Füllen der Rinne mit einem unmagnetischen Material (5), das den Magnetspalt bilden soll, wobei beim Füllen das unmagnetische Material über die Rinne (3) überläuft,
- vierter Schritt: Polieren des überstehenden Materials, bis die Substratebene erreicht ist,
- fünfter Schritt: spanende Bearbeitung des Substrats von einer anderen als der aktiven Fläche her, um einen Magnetspalt einer bestimmten Tiefe zu erhalten,
- sechster Schritt: Befestigung eines Gegenstücks zum Schließen des Magnetkreises auf den Magnetpolen,
- siebter Schritt: Anbringen einer Spule in dem durch die Pole und das Gegenstück gebildeten Magnetkreis.

2. Verfahren nach Anspruch 1, dadurch gekennzeichnet, daß der siebte Schritt vor dem sechsten erfolgt.

3. Verfahren nach einem der Ansprüche 1 oder 2, dadurch gekennzeichnet, daß zur Durchführung des dritten Schritts das unmagnetische Material in Form eines Stabes (4) vorliegt, der erst auf die Rinne (3) aufgelegt wird, worauf das unmagnetische Material in die Rinne eingebracht wird.

4. Verfahren nach Anspruch 3, dadurch gekennzeichnet, daß das Einbringen des unmagnetischen Materials in die Rinne durch Erwärmen des Stabes (4) auf eine sein Schmelzen hervorrufende Temperatur erreicht wird.

5. Verfahren nach einem beliebigen der Ansprüche 1 bis 4, dadurch gekennzeichnet, daß der fünfte und der sechste Schritt folgendermaßen ablaufen:
- fünfter Schritt: Ausschneiden einer Nut (6) auf der der aktiven Fläche (1) entgegengesetzten Substratfläche, bis das unmagnetische Material erreicht und ein Magnetspalt (7) einer bestimmten Tiefe erzielt ist,
- sechster Schritt: Befestigung des Gegenstücks (8) zum Schließen des Magnetkreises auf den Magnetpolen (11, 12), die durch die Nut (6) begrenzt sind.

6. Verfahren nach einem beliebigen der Ansprüche 1 bis 4, dadurch gekennzeichnet, daß der fünfte und der sechste Schritt folgendermaßen ablaufen:
- fünfter Schritt: Abschleifen des Substrats (2) von der der aktiven Fläche (1) entgegengesetzten Substratfläche, bis Magnetpole (21, 22) erreicht werden, die durch einen Magnetspalt (20) einer gegebenen Tiefe voneinander getrennt sind,
- sechster Schritt: Befestigung eines U-förmigen Gegenstücks (25) auf den Magnetpolen (21, 22), so daß der Magnetkreis geschlossen wird.

7. Verfahren nach einem beliebigen der vorhergehenden Ansprüche, dadurch gekennzeichnet, daß die Befestigung des Gegenstücks zum Schließen des Magnetkreises auf den Magnetpolen durch Kleben erfolgt.
